# EUROPEAN PATENT APPLICATION

(11) **EP 2 887 733 A1**
(43) Date of publication of application: **24.06.2015**
(21) Application number: 13199254.7
(22) Date of filing: 20.12.2013
(51) Int. Cl.: H04W 36/00, H04W 36/12, H04W 24/04

(54) **Mobility for mobility anchors**

(71) Applicant: NTT DoCoMo, Inc., Tokyo (JP)
(72) Inventor: Kiess, Wolfgang, 80687 Munich (DE); Lott, Matthias, 80687 Munich (DE); Khan, Ashiq, 80687 Munich (DE)
(74) Representative: Betten & Resch

(57) **Abstract**

This invention is concerned with a method for migrating in a mobile communications network a first mobility anchor handling a first subnetwork of the mobile communications system and having a plurality of user equipments connected thereto to a second mobility anchor handling a second subnetwork, the method comprising: establishing in the second mobility anchor copies of the bearer states at the first mobility anchor including the address under which the user equipment is reachable; informing one or more network entities outside the first mobility anchor that the first subnetwork and the bearers belonging to the subnetwork which has been reachable through the first mobility anchor is now reachable via the second mobility anchor.

## Description

### FIELD OF THE INVENTION

The present invention relates to a method and an apparatus for implementing the migration of mobility anchor points, to the virtualization, gateway virtualization, bearer migration, and gateway migration in mobile communication networks.

### BACKGROUND OF THE INVENTION

In a disaster case, the location where a mobility anchor point of a 3GPP network is running might be destroyed. The disaster can be an earthquake or a tsunami, so a certain pre-warning time of a few tens of seconds to minutes will exist.

To overcome this situation, the mobility anchor points of the mobile network, which may comprise a packet gateway (PGW) and serving gateway (SGW), in the remainder of this text abbreviated as PSGW, or only a packet gateway, should be moved to another location. The following requirements in such a scenario preferably should be fulfilled:
- The IP addresses of the UEs associated with the mobility anchor points must not change
- Running sessions (bearers) must not be interrupted
- For end-to-end connections and applications, the migration must not be visible/noticeable (e.g. an active TCP connection should be maintained and the UE should be visible with the same IP address in the Internet).

Besides the disaster case, such a technology can also be applied e.g. for energy saving or maintenance, where a part of a datacenter should be shut down and the applications (in our case mobility anchors points) running in that datacenter should be migrated to another location.

In the following sections, technologies in the area of mobility management are briefly described. However, most of the described technologies deal with the mobility of end user devices, not with the mobility of mobility anchors. None of the described technologies solves exactly the above outlined problem of migrating a mobility anchor point.

In the following, technologies are described that are related to mobility anchors:
The first technology concerns the Evolved Packet Core (EPC), specified in the 3GPP technical specification: In the current EPC, the SGW can be changed by the standardized handover procedure. This can be considered as a kind of migration, as the processing of a bearer is moved from one SGW to another. However, the PGW cannot be migrated with current technology.
The second technology is related to the Mobile IP network protocol standard: The Proxy Mobile IPv6 (PMIP) resp. Mobile IP (MIP) are based on the concept of anchor points that cannot be changed. The protocol maintains the same IP address across different interfaces (e.g. if changing from 3GPP to non-3GPP like WiFi). However, the anchor point (implementation of the local mobility anchor (LMA) resp. home agent (HA) in the PGW in case of 3GPP architecture) cannot be changed.
   In case of a solution where the anchor point (LMA, HA) is implemented outside of the PSGW, this new location respectively the anchor point is the vulnerable point in case of a disaster and should be migrated. In addition, such a solution is not consistent with the 3GPP standard (e.g. locating the Mobility Access Gateway, MAG, in the PSGW).

Further technologies are described in the following that involve communication endpoints._A number of proposals exists in which the endpoints of a communication relation are involved in the mobility management process. The drawback of these approaches is twofold: first, this involvement of the endpoints (in our case, these are the mobile user equipments (UEs) and e.g. a server on the Internet) requires a change to the existing network, as 3GPP networks handle the mobility by means of mobility anchors. Second, it is not clear how an endpoint mobility solution can overcome the disaster case in which part of the communication channel between the endpoints is destroyed as these approaches have been designed for a different problem in the first place.

The first technology is related to the Host Identity Protocol specified in an IETF standard (IETF HIP): Communication endpoints are updated and no mobility anchor exists. Instead, the protocol proposes to decouple locator and identifier and introduce a new protocol layer between network and transport for this. Obviously, this has an impact on the running application and requires changes in the communication endpoints, which should be avoided if possible. Furthermore, it is not clear how it can solve our problem at hand.

The second technology is related to the European patent EP 1814279 B1: In this technology, a bearer is moved from one device to another device, e.g., from smartphone to tablet. In this technology, the communication endpoints are updated and no mobility anchor point exists. Hence this technology solves a different problem and does not provide any contribution or hint on how to solve the problem addressed by the present invention.

Yet further technologies implement migration on the basis of a 'terminate and re-establish'-approach:_One solution is to simply terminate all bearers running through the old PSGW. In this case, the attached UEs will start to reattach to the network, new bearers will be created and the connection is re-established. This has several shortcomings:
- The IP address of the UE changes. As most higher layer protocols (TCP, UDP, VPNs,...) use the IP address as both locator and identifier, the same UE when reconnected to the network with a new IP address will appear as new user. Thus, the session will be interrupted (the UE will not be visible by the communication partner / proxy / server under the old IP address)
- When all UEs reconnect at the same time, this will overload the MME.

One known solution in this category is US patent application US20120214492. It proposes to establish the new bearer as standby bearer in the new SPGW, then tear down the old one and subsequently activate the new one. This is an optimization of the generic case described above. It shortens the time to activate the new bearer. However, it does not overcome the fundamental listed shortcomings of the 'terminate and re-establish' approach.

### SUMMARY OF THE INVENTION

The present invention is concerned with a method for migrating in a mobile communications network a first mobility anchor handling a subnetwork of the mobile communications system and having a plurality of user equipment (UEs) connected thereto to a second mobility anchor, the method comprising: establishing in the second mobility anchor copies of the bearer states at the first mobility anchor including the address under which the user equipment is reachable; informing one or more network entities outside the first mobility anchor that the subnetwork which has been reachable through the mobility anchor is now reachable via the second mobility anchor.

This method has the first effect and advantage that a high degree of robustness against failure and outage of the first mobility anchor point is provided which means that in the case of an emergency or disaster in the area where a data center hosting the first mobility anchor point is located, the method enables migration of the services provided by the first mobility anchor point to a second mobility anchor point, which is implemented outside the area affected by the disaster thus enabling to provide continuous service to users using the first and, after migration, the second mobility anchor point. A second advantage is that the migration occurs seamlessly, meaning that there is no or a minimum of disruption of the service during the migration procedure.

According to another aspect of the method, the data to and from the UEs after the migration passes through the second mobility anchor instead of the first mobility anchor.

This has the effect that after the migration, the first mobility anchor is not necessary any longer for providing communication services to UEs and thus the resources related to the first mobility anchor can be released.

According to another aspect, the first mobility anchor located in a first packet gateway (PGW) and the second mobility anchor located in a second packet gateway (PGW), additionally comprising an SGW, the method comprising: sending a create session request (CSR) to the SGW; the SGW sending a CSR to the second PGW; issuing a rerouting request which informs one or more network entities outside the subnetwork that the packets directed to and from the user equipment are now to be routed through the second PGW.

This has the effect that the IP address of a user equipment forming a communication endpoint connected to the Internet through the first mobility anchor before the migration will be left unchanged by the migration method.

According to another aspect, the sending of a CSR to the SGW is done from a mobility management entity (MME), wherein the sending of a CSR to the second PGW is done from the SGW.

This has the effect that the method is applicable to communication networks based on the 3GPP standard.

According to another aspect, the sending of a CSR to the second PGW establishes a copy of the bearer in the second PGW with the existing address of the user equipment address of the bearer belonging to the subnetwork.

This has the effect that the migration method can be implemented with little additional features and modification to the components specified in the existing 3GPP standard.

According to another aspect, the CSR to the SGW is configured such that it either implicitly or explicitly contains an indication of the second PGW to inform the SGW that also the second PGW should be prepared to handle the bearer.

This has the effect that the migration procedure can be performed in stepwise process, enabling gradual transition by using, during the migration, resources from the first and the second mobility anchor at the same time.

According to another aspect, the CSR to the SGW contains a parameter indicating the request to change the PGW.

This has the effect that the migration method can be implemented with little additional features and modification to the components specified in the existing 3GPP standard.

According to another aspect, the SGW is configured to receive a configuration message indicating the request to change the PGW and disabling handover with SGW relocation during the migration time, wherein the CSR to the SGW is a normal CSR.

This has the effect that there is no need to enhance the interface of the SGW, e.g., by conceiving a new type of message, since a normal CSR message, as in a normal handover case, can be used during the migration. Thus, using this feature, the changes and additions to the interface of the SGW for enabling the migration functionality can be reduced.

According to another aspect, a border gateway protocol update message is used to inform the one or more network entities outside the first mobility anchor that the subnetwork which has been reachable through the first mobility anchor is now reachable via the second mobility anchor, or the one or more entities are one or more switches which are located before the first and the second PGW, and the second PGW after having created a copy of a bearer informs the one or more switches to change the routing such that the traffic of the bearer is routed through the second PGW instead of through the first PGW, or the one or more entities are MPLS switches connecting one or multiple entrance points with the first and second PGW and an update is done by setting up a new MPLS tunnel between a network entrance point and the new PGW, or the one or more entities are IP routers connecting one or more multiple entrance points with the first and second PGW using an interior gateway protocol to update the routing between a network entrance point and the new PGW.

This has the effect that, from the perspective of individual connections that UEs may have with the Internet, the transition between first mobility anchor and the second mobility anchor occurs transparently and instantaneously, such that ongoing TCP/IP connections are maintained during the migration.

According to another aspect, the method comprises further the steps of sending a CSR to the SGW which indicates that the migration should be performed using a rerouting in a switch layer comprising one or more switches located before the first and the second PGW; triggering the rerouting of the traffic by the second PGW after the corresponding bearer has been established therein.

This has the effect that the changes required to adapt the routing of traffic from the Internet to UEs which bearers are migrated can be limited to a small number of switches thus yet improving the migration efficiency, i.e. reducing the resources required and the time to perform the migration.

According to another aspect, the rerouting comprises: the second PGW contacting the switch based on information which it has received with the CSR message; or the second PGW contacting the switch which it has been preconfigured to use for the rerouting; or the second PGW contacting a controller which determines the switch to be used for the rerouting, the method further comprising: updating the switching table in the switch or switches triggered by the second PGW to reroute the traffic through the second PGW instead of the first PGW.

This has the effect that the rerouting can be initiated from components and information available within the 3GPP standard or the proposed extensions thereof.

According to another aspect, the method uses messages used in a handover with a SGW change, wherein the create session request message contains an indication that the second PGW should be prepared to handle the bearer, the indication preferably comprising the address of the second PGW, and the SGW in response to the indication sends a create session request to the second PGW to establish a copy of the bearer in the second PGW.

This has the effect that the migration method can be implemented with little additional features and modification to the components specified in the existing 3GPP standard.

According to another aspect, the method comprises further: Routing uplink packets from the SGW to the second PGW after the corresponding bearer has been established in the second PGW while downlink packets are still routed through the first PGW, or routing uplink packets from the SGW to the second PGW after the the rerouting request has been issued and downlink traffic has reached the SGW via the second PGW.

This has the technical effect that the transition of the processing load from the first to the second PSGW occurs gradually and not abruptly, since the load of bearer processing is balanced between the first and second PSGW during the migration. This has the further effect that the delay during handover and the risk of sudden overload during the migration is reduced, thus the overall migration process becomes more fail-safe.

According to another aspect, the idle bearers are migrated after the rerouting has been performed for the active bearers.

This has the technical effect that the migration of active bearers is completed earlier.

According to another aspect, the method further comprises, for the idle bearers to be migrated, sending a CSR to the SGW and from the SGW to the second PGW; after having established the copies in both the SGW and the second PGW, if a bearer becomes active again, transmitting traffic through the SGW and the second PGW.

This has the effect, that the handover of bearers that are initially idle and then become active during the migration, can occur earlier and thus staggered in time from the migration of bearers that are active during the entire migration period.

According to another aspect, the copies of the idle bearers are established at the second PGW wherein the sending a CSR to the SGW is preferably done from a mobility management entity (MME).

This has the effect that information about data traffic and other information available at the MME can be taken into account when controlling certain aspects of the migration.

According to another aspect, the method further comprises, if an idle bearer becomes active before the rerouting has been established, migrating the bearer according to the procedure for the migration of active bearers, and if an idle bearer becomes active after the rerouting has been established, migrating the idle bearer by a CSR sent, preferably from an MME, to the SGW and a CSR sent, preferably from the SGW, to the second PGW.

This has the effect that the migration can also handle idle bearers that become active during the migration.

According to another aspect, the first mobility anchor is located in a first packet gateway (PGW) and the second mobility anchor located in a second PGW, the first PGW being connected to a first SGW, which is different from the SGW, and the second PGW being connected to the SGW, also referred to as the second SGW, and the method comprises: sending a create session request (CSR) to the second SGW, sending a CSR to the second PGW, sending a modify bearer request (MBR) to the first PGW, issuing a rerouting request which informs one or more network entities outside the subnetwork that the packets directed to and from the user equipment are now to be routed through the second PGW.

This has the effect that method is capable of migrating both SGW and a PGW constituting the mobility anchor to be migrated. Furthermore, the IP address of a user equipment forming a communication endpoint connected to the Internet through the first mobility anchor before the migration will be left unchanged by the migration method.

An additional aspect of the method including a first and second SGW is that the sending of a CSR to the first SGW establishes in the second PGW a copy of a bearer existing in the first PGW.

This has the effect, that a copy of the bearer can be created before the actual handover, thus preparing the handover through early resource allocation, thus reducing the amount of processing and copying necessary when the handover occurs, thus improving the efficiency and reducing the delay of the handover procedure on the critical path.

An additional aspect of the method including a first and second SGW is that the sending of a MBR to the first PGW is done from the second SGW and instructs the first PGW to redirect traffic via the second SGW.

This has the advantage that the migration occurs in a stepwise process and that the bearer processing is moved from the first SGW to the second SGW and thus that the resources of the first SGW may be released early.

According to another aspect of the method including a first and second SGW, messages used in a handover with a SGW change comprise a path switch request ACK message sent from the mobility management entity (MME) to the eNB to which the user equipment is connected, wherein the eNB is configured such that it accepts this path switch request ACK message without having sent a path switch request before.

This has the effect, that the eNB can participate and support the migration method without the need to change the interface of the eNB.

According to another aspect of the method including the first and the second SGW, a SGW handover procedure is used to redirect traffic of the bearers from the first PGW to the SGW, wherein, after redirection of one of the bearers, the uplink traffic of the bearer flows through the SGW to the first PGW, the downlink traffic of the bearer flows through the first PGW to the SGW, and the second PGW is prepared with a copy of the state of the bearer processed by the first PGW, so that the second PGW could process packets for the bearer, wherein before rerouting the traffic through the second PGW in order to handle modifications of bearers during the migration the method comprises: updating the second PGW in case of the state of a bearer still routed through the first PGW being modified wherein the updating is preferably initiated by the SGW, or preventing modifications of a bearer before rerouting the bearer through the second PGW, or redirecting all uplink user data and signalling data to the second PGW once the bearer has been established therein.

This has the effect that, the state of the bearer in the second PGW is available and current such that, when the redirection of the bearer actually occurs, a delay which would be caused by the setup and initialization of the bearer state in the second PGW can be avoided. Furthermore, the copying of the bearer state occurs ahead of the actual redirection of the bearer concurrently to the critical bearer processing during operation of the active bearer.

The present invention is further concerned with an apparatus acting as a second mobility anchor and being adapted to migrate in a mobile communications network a first mobility anchor handling a subnetwork of the mobile communications system and having a plurality of UEs connected thereto to a the second mobility anchor such that the data to and from the UEs after the migration passes through the second mobility anchor instead of the first mobility anchor, the apparatus comprising: a module for establishing in the second mobility anchor as per-bearer states copies of the bearer states at the first mobility anchor; a module for informing one or more network entities outside the first mobility anchor that the subnetwork which has been reachable through the first mobility anchor is now reachable via the second mobility anchor.

According to another aspect, the apparatus comprises further a module adapted to perform the steps according to the method and its various aspects described above.

### BRIEF DESCRIPTION OF THE DRAWINGS

The invention is described in detail with the drawings in which:
Figure 1 is an overview of a configuration of the present invention;
Figures 1A to 1K is an overview of a configuration of the present invention including the stepwise illustration of interaction between components during the migration of active bearers;
Figure 2 is a signaling sequence diagram specifying a possible sequence of messages exchanged between components of the system during anchor point migration.
Figure 3 is a signaling sequence diagram of X2-based handover with SGW relocation according to 3GPP TS 23.401 adopted therein from Figure 5.5.1.3-1.
Figure 4 is another overview of a configuration of the present invention with switches located on the traffic flow between the Internet and the PGWs;
Figure 5 is a signaling sequence diagram specifying a possible sequence of messages exchanged between components of the system during anchor point migration.
Figure 6 is a signaling sequence diagram, showing specifying a possible sequence of messages exchanged between components of the system related to the migration of idle bearers.

### DETAILED DESCRIPTION

At first some terms used in the following description will be defined.

### List of Abbreviations:

- APN: Access Point Name
- BGP: Border Gateway Protocol
- CSR: Create Session Request
- DL: Downlink
- eNB: Evolved Node B (also eNodeB)
- EPC: Evolved Packet Core
- HIP: Host Identity Protocol
- MBR: Modify Bearer Request
- MIP: Mobile IP
- MME: Mobility Management Entity
- OAM: Operation and Management
- OCS: Online Charging System
- OF: OpenFlow
- OFCS: Offline Charging System
- PDN: Packet Data Network
- PGW: Packet Data Network Gateway
- PMIP: Proxy Mobile IP
- PSGW: PGW and SGW

In the following embodiments of the invention will be described.

The present invention in one embodiment considers a scenario where the mobility anchor of a mobile communication system can be transparently migrated. For the case of EPC, this can mean that an SPGW can be moved from one location to another one, e.g. from one data center (DC) to another. In another embodiment this can mean that only a PGW is migrated. In the following some embodiments will be described where the mobility anchor point comprises an SPGW, but in other embodiments the mobility anchor point may only comprise a PGW.

In one embodiment the migration comprises establishing in a second mobility anchor (a second SPGW) copies of the bearer states at said first mobility anchor (a PGW or SPGW) including the address under which said user equipment is reachable. The embodiment further comprises informing one or more network entities outside the first mobility anchor that the subnetwork which has been reachable through the first mobility anchor is now reachable via the second mobility anchor.

To this end, according to one embodiment there is proposed to a) move the processing of the bearers that run through the old SPGW one after the other to the new SPGW and b) after all bearers have been moved to reroute all traffic via the new SPGW. This is in one embodiment done by using a modified version of the 3GPP specified SGW handover procedure:
- In a first step, the bearer processing is redirected from the old SGW to the new SGW. This is done such that the traffic flow for the downlink (DL) traffic is "old PGW => new SGW" and for the uplink (UL) traffic is "new SGW => old PGW".
- In parallel, the new PGW is prepared with the necessary information, such that it can process the packets for the bearers once they arrive.
- After all bearers have been migrated in such a fashion (still running over the old PGW and new SGW, and the new PGW being equipped will all necessary information), a Border Gateway Protocol (BGP) update message is issued to the networks outside the mobile domain. This message indicates that the sub-network for which the old PGW was responsible as router is now reachable via the new PGW. Once this message propagates, the routers will redirect the traffic to the new PGW.
- The migration has been completed and the resources in the old PSGW can be freed.

The old and the new PGW, which are subsequently also referred to as first and second PGW and which constitute the source and the target of the migration, are different entities. In contrast, in some embodiments, the old and the new SGW can be one and the same entity, i.e. the migration does not involve a change of the SGW.

This process may be triggered by a message to the Mobility Management Entity (MME). For each bearer, the MME (or some other entity) in one embodiment will then subsequently issue a Create Session Request (CSR) that will be sent to the new SGW and that indicates that besides a handover from the old SGW, which is to be migrated to the new SGW, also the new PGW should be prepared with the necessary information. The new SGW thus in one embodiment sends a) a Create Session Request message to the new PGW to make the necessary setups, and b) a Modify Bearer message to the old PGW that instructs the old PGW to redirect the traffic via the new SGW.

In another embodiment, when the migration does not involve a change of the SGW, the MME will, after being triggered, subsequently issue a CSR that will be sent to the SGW which indicates that a new PGW should be prepared with the necessary information. The SGW thus in one embodiment sends a Create Session Request message to the new PGW to make the necessary setups. Furthermore, the SGW duplicates all signaling to the new and old PGW during migration to keep the new and the old PGW synchronized.

Two variants of this procedure may be specified according to different embodiments: In the first variant, the MME signals in the initial CSR the desire to migrate, in the second variant, the SGW is preconfigured to perform this migration in case it receives an already existing CSR message (at the cost of disabling the feature for which this CSR message was initially designed for). In a third approach according to a further embodiment to gateway (GW) migration that is described herein, a switch is used to redirect the traffic already in front of the GWs.

The present invention provides several advantages, some of which are related to the novel migration scheme for the co-located or separated PSGW.
- Mobility anchor points of a 3GPP EPC network can be migrated to another location
   The major benefit and motivation for this invention is the possibility to migrate the anchor point of a 3GPP EPC network and, consequently, the PSGW without impacting the operations and ongoing sessions.
- IP address of connected UEs does not have to change
   The migration happens without impacting the IP address of connected UEs and, hence, active sessions.
- Sessions are not interrupted
   Since the IP address is not changed and the migration (change to the new PSGW) happens transparently to the end-points of the active connections, the session is not interrupted. No considerable delays / delay-jitter is assumed. Since the transition to the new PSGW is prepared, the real change of GWs is performed in the minimal possible duration without perceptible impact on the application.
- MME can control signaling speed (the MME is not overloaded, but can perform the signaling at its own possible speed).
   The MME can decide on which UEs (bearers) to migrate and with what speed. This avoids signaling traffic peaks as they would occur if a whole PSGW will be instantaneously turned off and affected UEs perform a re-attach. Stability problems during the migration process can be avoided respectively kept under control.
- Idle connections are migrated efficiently.
   The migration of the idle UEs and their respective bearers (GTP paths) are transferred with a minimum of necessary messages quite similar to a normal handover from the old to the new GW and new sessions can be handled directly by the new PSGW. They are handled completely by the new PSGW after the novel modified session requests have been exchanged between MME, S- and P-GW. A minimum set of new messages and procedures have to be incorporated into the 3GPP standard.
- Virtualization based migration: the procedure described in this disclosure is suitable for a scenario where the PSGW run in a virtualized configuration, although it will also work for a classical, non-virtualized configuration. One of the features in most such configurations currently examined in the literature is the independent scaling of data and control plane. As the proposed procedure relies on signaling, the combination with such approaches is especially beneficial as for the time of the migration, more resources can be assigned to the control plane, which will speed up the migration process.

In the scenario considered in one embodiment, the PSGW is initially located in one datacenter, and after the migration should be located in another datacenter. It is assumed that the different datacenters may have different connections to the Internet. Thus, from the point of view of a router in the Internet, the PSGW combinations in the two datacenters may be reachable via different links.

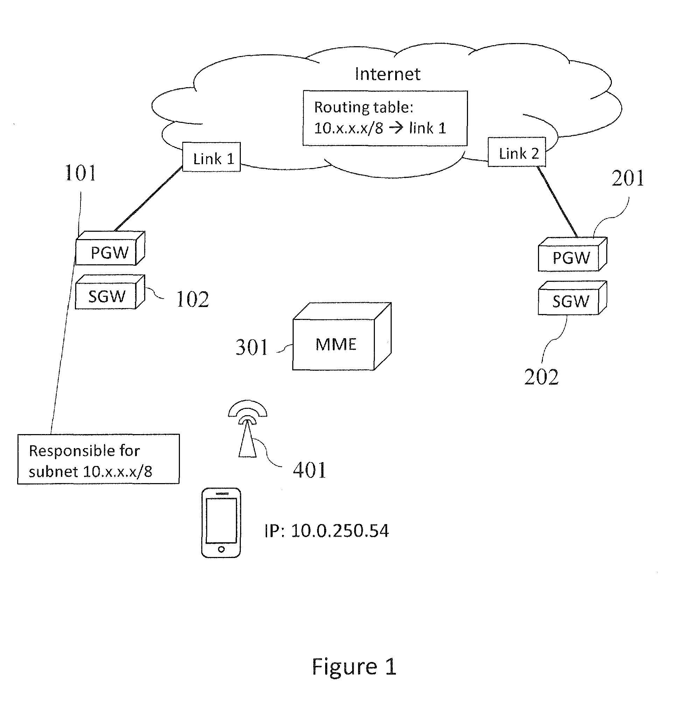

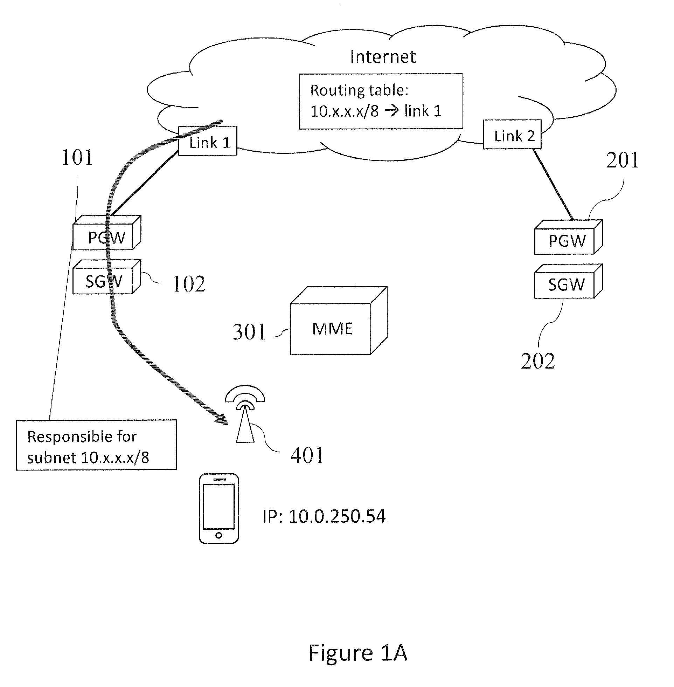

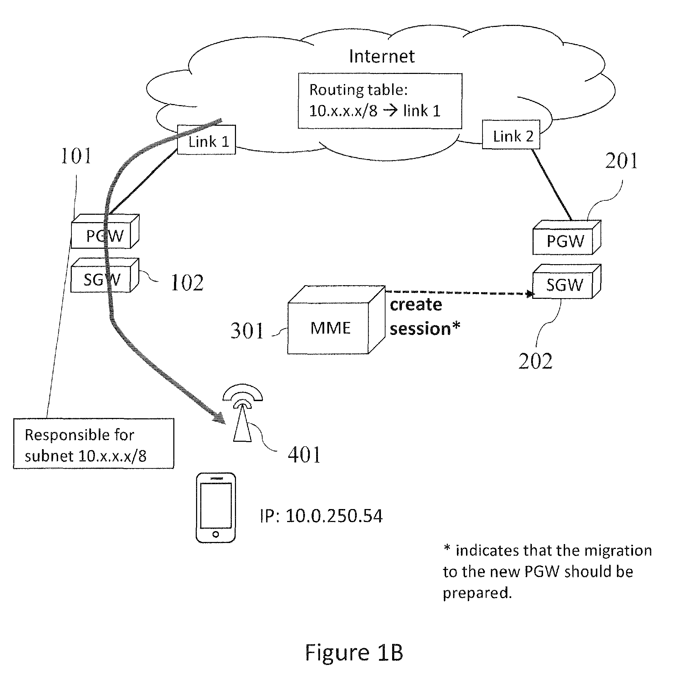

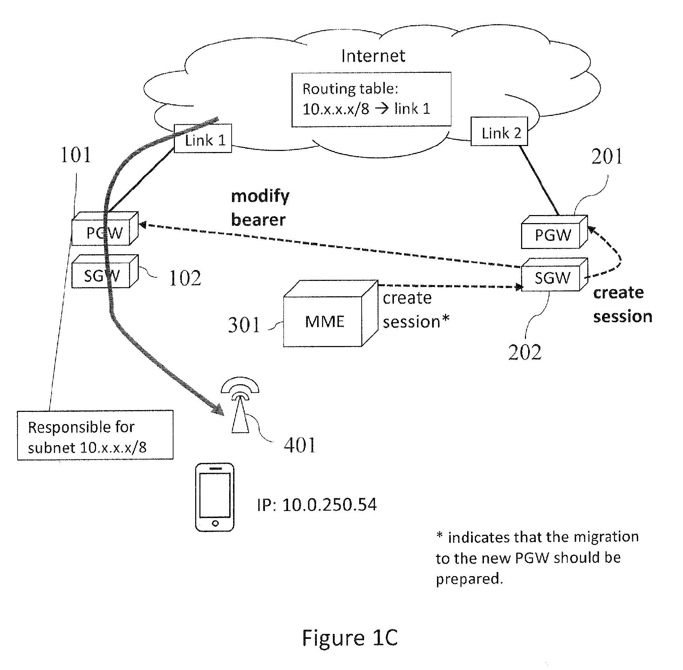

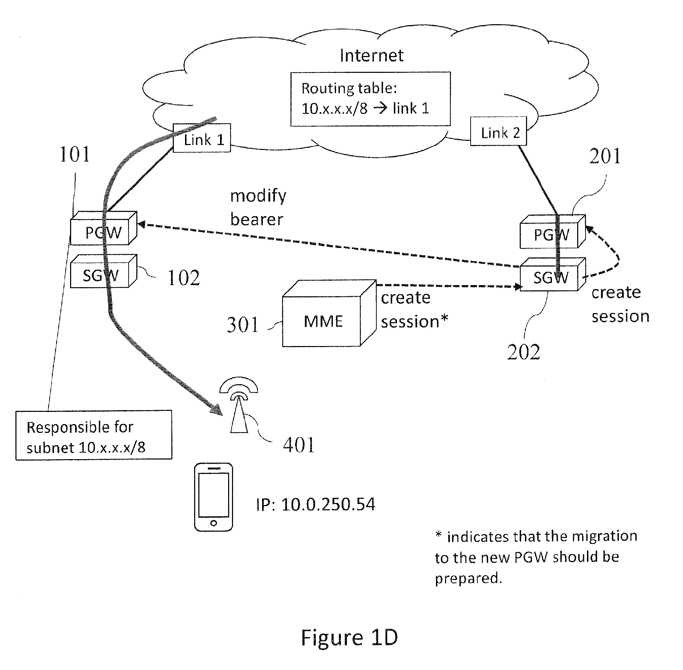

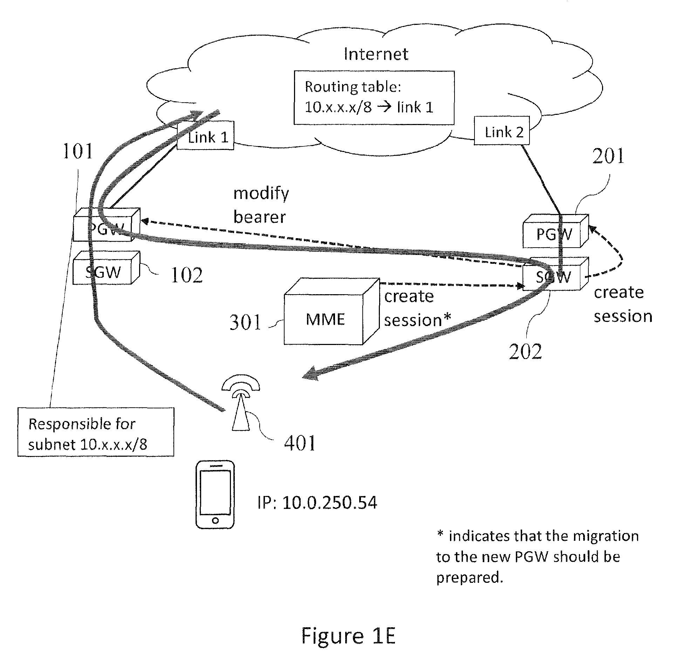

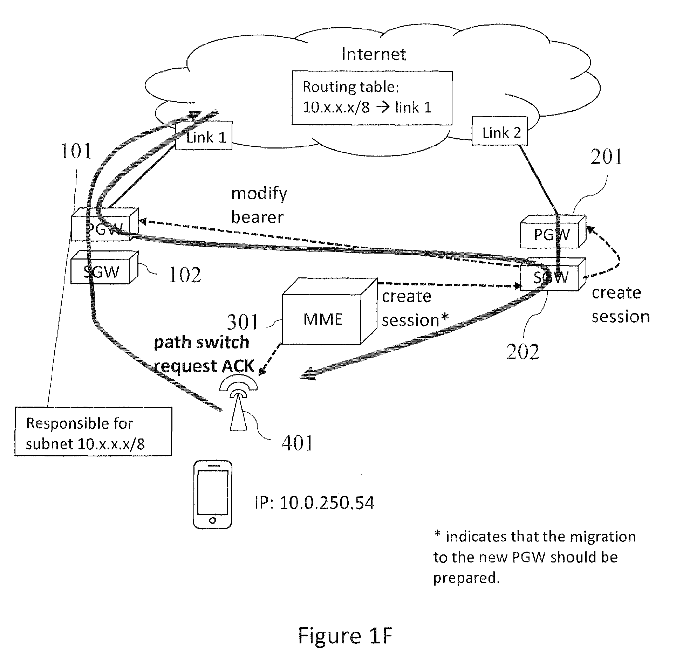

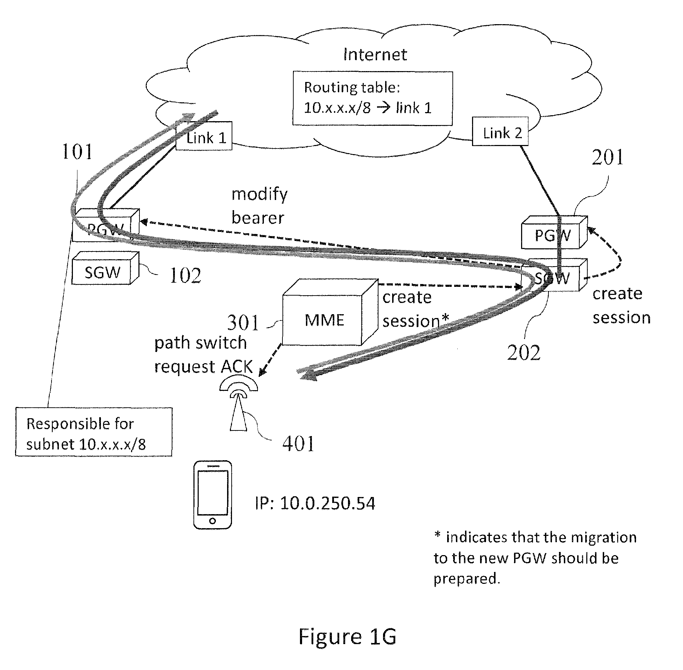

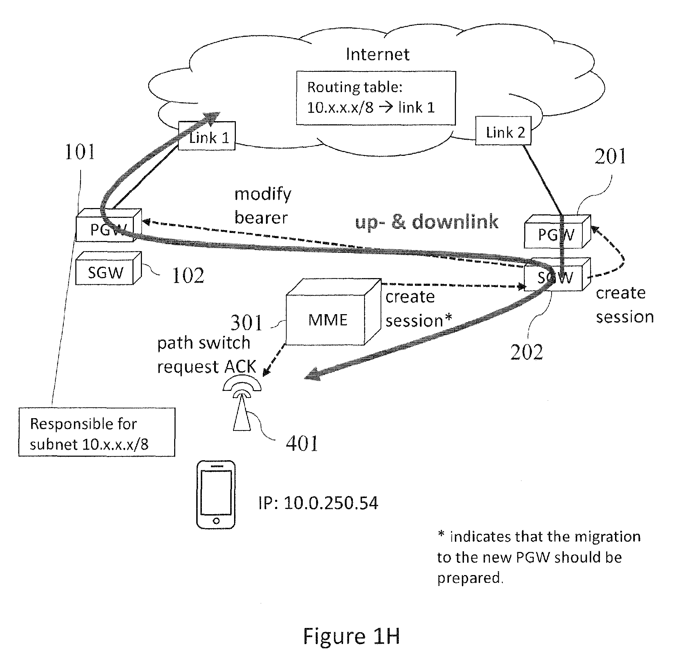

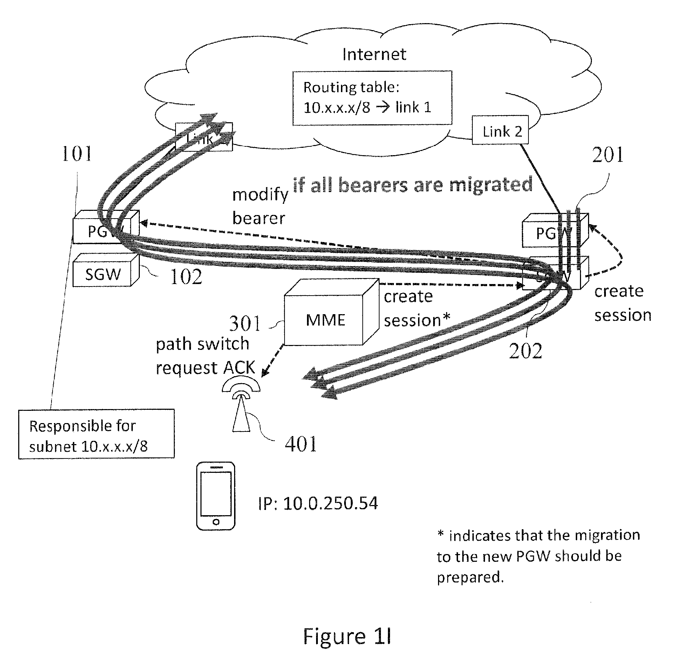

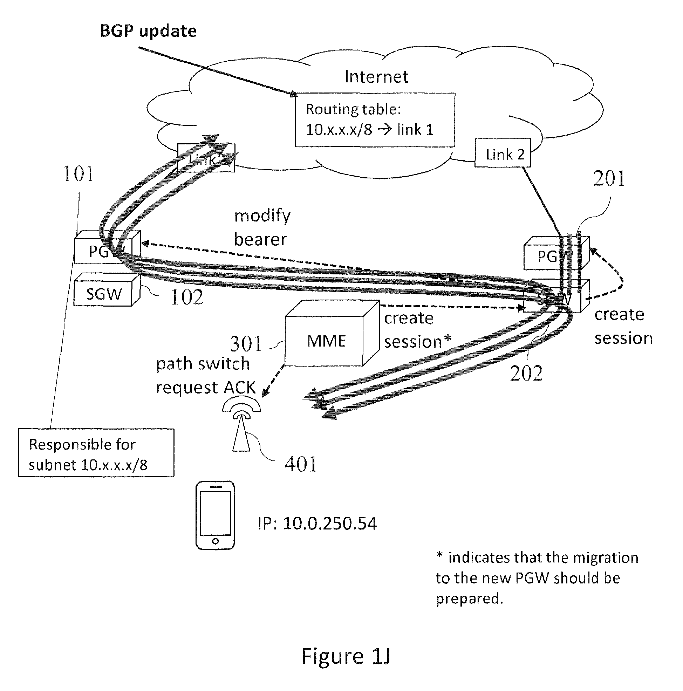

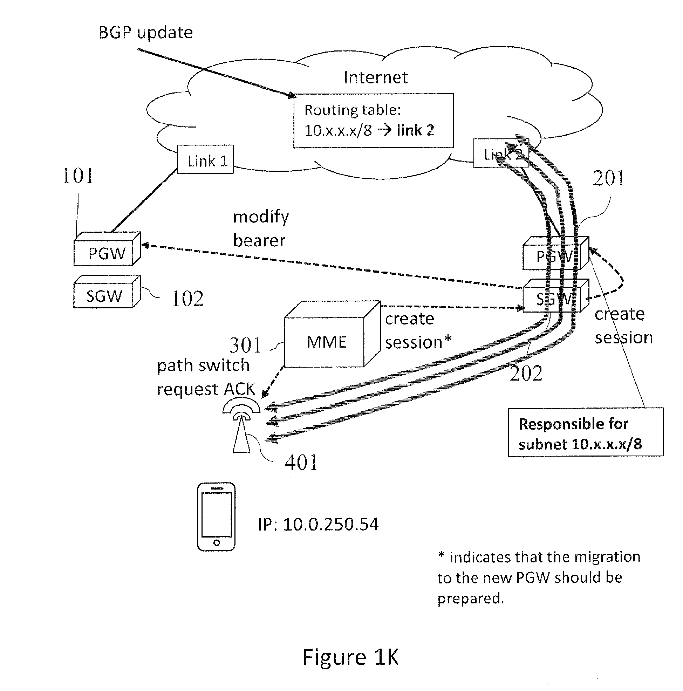

An overview of the configuration can be found in Figure 1. It consists of the old PGW 101 and the old SGW 102, which is the combination of PGW and SGW through which the traffic traverses before the migration. Furthermore, there is the new PGW 201 and the new SGW 202 to which the traffic is to be migrated. Besides, there is an MME 301 and a base station 401.

The method according to an embodiment of the present invention related to gateway migration is comprised of four overall steps:
1. Informing the MME that bearers of old PSGW should be migrated to new PSGW (step S201)
2. Migrating active bearers (step S202)
3. Migrating idle bearers (step S203)
4. Updating external routing (step S204)

Step S201 may be triggered by a human or by a management entity like an OAM (Operation and Management) system that has decided that the old PSGW 101/102 is to be migrated to a new location. This entity will thus transmit the migration decision to MME 301 in step S201. Upon receiving this information, the MME will then trigger the migration of the active bearers associated with PSGW 101/102 by issuing appropriate signaling messages to the SGW 102 in step S202. A bearer is active if the mobile network holds the necessary state to support an ongoing data transmission on the communication path between a certain UE and the Internet corresponding to the bearer. Conversely, for an idle bearer there is no S1_MME and no S1_U connection for the UE at present, yet provisions in the form of a bearer setup and bearer state are present in the PSGW in anticipation of upcoming data transmissions between the UE and the Internet.

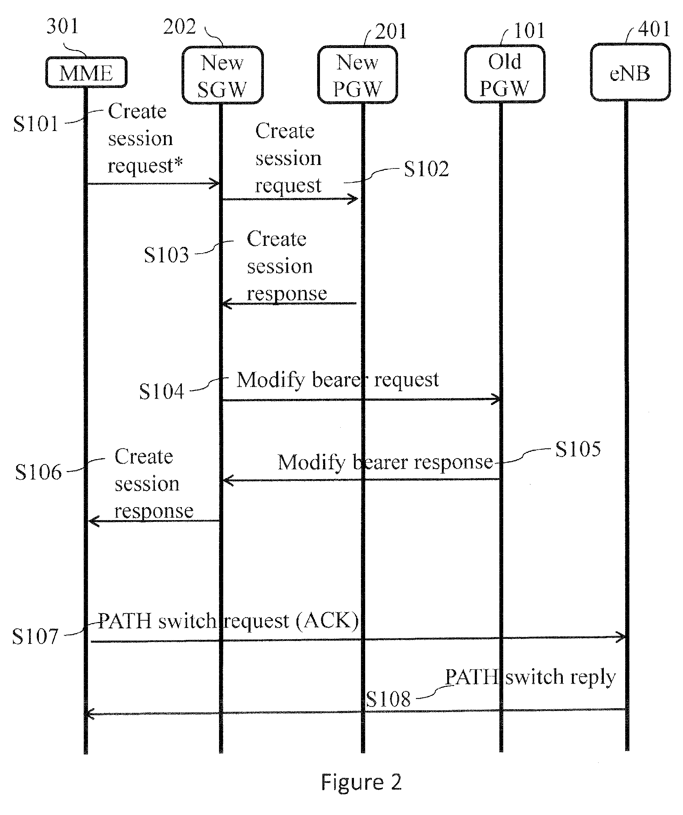

In the following, it will first be described how the active bearer migration is performed (step S202 in the above procedure) according to the steps illustrated in Figures 1A to 1K and the signaling sequence shown in Figure 2, and then the other necessary steps 3 and 4 of our overall procedure are explained. For step S202, there are a total of three different variants or embodiments that are described in this text.

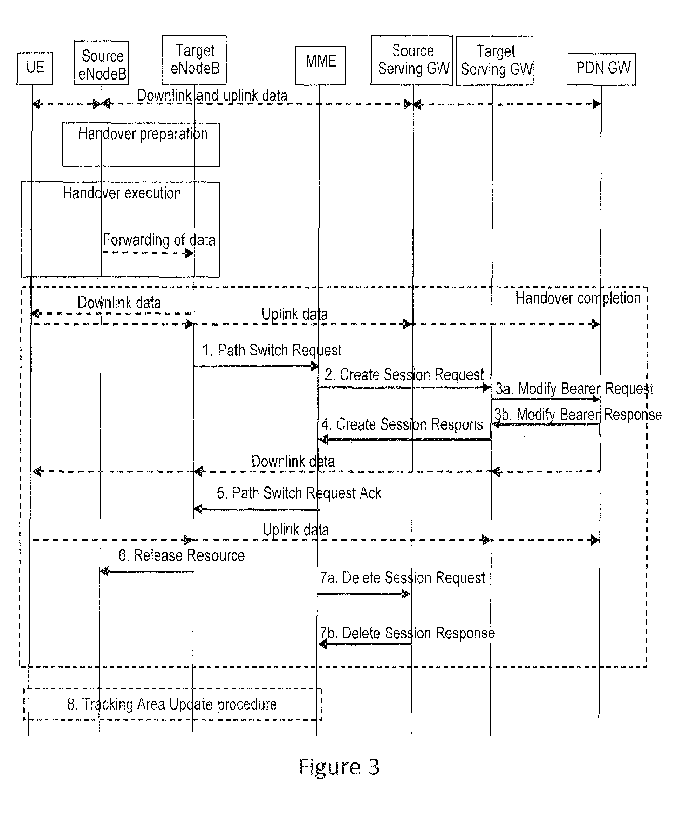

The first variant is related to active bearer migration with special signaling according to the steps illustrated in Figures 1A to 1K and the signaling sequence shown in Figure 2. The active bearer migration procedure described in this section is for a single active bearer. A scenario, which should serve as a starting point for the illustration of the active bearer migration procedure, is illustrated in Figure 1A, where a bidirectional communication path based on an active bearer is set up through the old PGW 101 and the old SGW 102. The basic idea for the active bearer migration procedure according to this embodiment is derived from existing 3GPP procedures for a handover with SGW relocation shown in Figure 3. In the existing 3GPP procedure, which does not allow a relocation of the PGW, the MME signals to the new SGW to prepare for the new traffic, and the SGW then signals to the old PGW to redirect the traffic to it. An additional step is added that the new PGW is also prepared for the traffic of this bearer, thus the MME may transmit this information accordingly. To this end, some of the existing messages from the existing 3GPP procedure, e.g. CSR (create session request) messages, need to be modified to reflect this change.
- S101: The migration starts with a 'create session request*' (CSR) S101 message transmitted from the MME to the new SGW. This step is illustrated in the scenario in Figure 1B. The change compared to a message conforming to the 3GPP standard is indicated by the '*' and is that the MME indicates that also the new PGW should be prepared for the new bearer during this procedure (steps S102 and S103 which do not exist in a normal 3GPP procedure the corresponding steps of which are illustrated as steps 2 to 4 in Figure 3). Thus, the message may contain two PGW addresses, the one of old PGW 101 and the one of the new PGW 201 involved in this signaling process besides all the other standard parameters of such a request.
- S102: The new SGW 202 may assign TEIDs (tunnel endpoint identifiers) for downlink traffic from the PGW and transmits a 'create session request' S102 message to the new PGW. This step is illustrated in the scenario of Figure 1C. Note that the normal, already existing 'create session request' according to the existing 3GPP standard may be sufficient for this task. The only necessary change might occur as the new PGW has to setup a bearer with the existing UE IP address, that at this moment is outside of its IP address range and which is transmitted with message S102.
- S103: the new PGW replies once it has made the necessary setups with a response message. The newly created bearer setup at the new PGW, which does not transport data yet, is illustrated in Figure 1D. The PGW might assign its own set of PGW TEIDs to be used for transmissions via this new PGW.
- S104: The new SGW issues a 'modify bearer request' to the old PWG according to the standard procedures. This step is illustrated in the scenario of Figure 1C.
- S105: The old PGW replies accordingly.
- S106: the SGW replies with a 'create session response' message to the MME. In this stage of the procedure, the downlink traffic for the bearer to be migrated runs already via the new SGW, while the uplink traffic still is transmitted via the old SGW. This situation is illustrated in the scenario of Figure 1E.
- S107: The MME transmits a message that is similar to a 'path switch request ACK' message to the eNB where the UE of this bearer is currently attached to. This step is illustrated in the scenario of Figure 1F. This message contains the new SGW IP address and the uplink TEIDs. The eNB starts to use the new IP address and uplink TEIDs and thus transmits the traffic to the new SGW. Although such a message exists in the 3GPP standard, referring to step 5 in Figure 3, the eNB must accept it without having sent a 'path switch request'.
- S108: The eNB confirms that is now transmits traffic to the new SGW. Compared to the 3GPP standard, this is a new message type but the message is optional.

After this procedure has been executed, the bearer is now processed via the old PGW 101 and the new SGW 201, while the new PGW 201 is in a standby configuration which at any time allows it to start processing traffic. This situation is illustrated in the scenario in Figure 1G and 1H. The MME executes this procedure for all bearers to be migrated, either one after the other or in parallel, depending on the MME's processing capabilities. This situation is illustrated in the scenario in Figure 1I.

Thus, the active bearer migration procedure described in this section relies on a modification of the initial CSR message between MME and SGW (S101) (compared to the existing 3GPP standard for a handover involving a change of the SGW), allowing also for a handover with SGW relocation even during the migration process.

The second variant is related to active bearer migration with a special SGW. In this variant, the amount of changes to existing signaling and interfaces may be reduced as much as possible, notably to the first CSR transmitted from MME to SGW (S101). To this end, the possibility to do a handover with SGW relocation for the time of the PSGW migration is be prohibited. Then, unlike in the previous case, no special message is needed but the normal CSR message that would be used in the handover case with GW relocation can be used. The SGW is now configured such that it, upon receiving such a CSR, issues both a modify bearer request to the old PGW and creates a session request towards the new PGW.

Compared to Figure 2, nothing changes except that there may be no need for mentioning the new PGW explicitly in the CSR but the new PGW is preconfigured in the new SGW already at the beginning of the migration process. Thus, no special signaling is necessary in this case.

The new SGW 202 has to be slightly modified in his procedures and message exchange with the new PGW 201.

The following concerns the treatment of signaling after the migration of a bearer but before migration completion according to one embodiment. After the handover of an active bearer, but before having updated the external routing in step S204, there are two PGWs, the old and the new one, that need to be updated in case some of the states of the bearers are modified. During this transition period, this is the job of the new SGW 202.

The new SGW 202 has to maintain the connection to the old PGW 101 as specified in the 3GPP standard, i.e. it performs a normal data and signaling exchange with the old PGW 101. At the same time the new SGW generates copies of all signaling messages to the new PGW to keep the new PGW 201 synchronized with the old PGW 101. E.g., Echo Request messages to find out if its peer is alive will be duplicated as well as session delete messages sent by the MME.

Special treatment is needed for those messages that originate from the old PGW and change the state of the bearer, e.g. if a bearer should be deleted and the old PGW 101 sends a Delete Bearer Request message that is received by the new SGW 202.

One possible solution ('no PGW driven signaling during migration') for such a case is to not process such messages in the migration period. During the migration the new SGW does not accept such messages, or uses the respective negative replies as specified by 3GPP. In case the PGW can/should be modified as well, also the old PGW can already reject such requests, thus avoiding modifications altogether.

Another, more complex solution ('mirror PGW driven signaling') is to modify the new SGW in a way to forward the signaling received by the old PGW to the new PGW 201 accordingly. The new PGW then has to understand those signals and the implemented procedures need to update the states internally correspondingly during the migration. The new PGW 201 can respond according to the 3GPP standard and the SGW might have to filter the messages from the new PGW 201. As example, consider a Delete Bearer Request message sent from the old PGW to the new SGW. The new SGW will reply with a Delete Bearer Response message. It can send the same response message also to the new PGW 201 which should also remove the respective bearer from his list. Note that this requires a change in the new PGW as it did not send a corresponding Delete Bearer Request message but nevertheless should act accordingly.

The third option to treat the signaling during this transition period according to one embodiment is to redirect the single bearer traffic to the new PGW 201 right after the new setup of the bearer states in the new GWs. That means, the new SGW 202 immediately sends all uplink (UL) user data and signaling data to the new PGW 201. By this procedure the states of the new PGW are kept up-to-date. However, the old PGW 101 will not get updated anymore and respective states might time-out. For that purpose at least path management messages, such as Echo Request / Response messages, might be sent from time to time.

Since the downlink (DL) traffic is still directed to the old PGW 101, at least for the DL, traffic state information has to be updated and/or kept up-to-date in the new PGW 201 with the help of the new SGW 202, as described under the previous option.

Overall, as the migration period is expected to be short (in the order of seconds to minutes at most), only few states will change, and a temporal misalignment in states might be acceptable.

The following concerns the treatment of uplink traffic according to embodiments of the invention. Data plane packets in the uplink direction that the new SGW transmits according to one embodiment follow a special treatment, as the new SGW needs to decide when to start transmitting uplink packets via the new PGW. In the Figures relating to the active bearer migration, the illustration of this step is simplified and relates to the transition between Figures 1J and Figure 1K. The details are however described below: There are two possible options how this can be implemented according to embodiments of the invention.

The first option is as follows: The route for the uplink packets is directly configured via the new PGW after the initial create session response message S103, wherein uplink packets will only arrive in the new SGW after step S107 has been executed. For this, the new and old PGW have to be configured to work with a split uplink and downlink: the uplink runs over the new PGW while the downlink still runs via the old PGW. Furthermore, routers on the Internet should accept packets that have a source IP that is topologically not correct from the point of view of the router. Packets from the UE with IP 10.0.250.54 will be transmitted via the new PGW and link 2. However, the "Internet" expects these packets to arrive via link 1 according to its routing table.

An advantage of this first option is that the direct rerouting reduces the load on the old PSGW and thus the resources in the old datacenter that should be offloaded anyway can be released.

The second option is as follows: The new SGW has a self-learning mechanism built-in. As soon as packets start to arrive in the downlink via the new PGW, it knows it can reroute also the uplink.

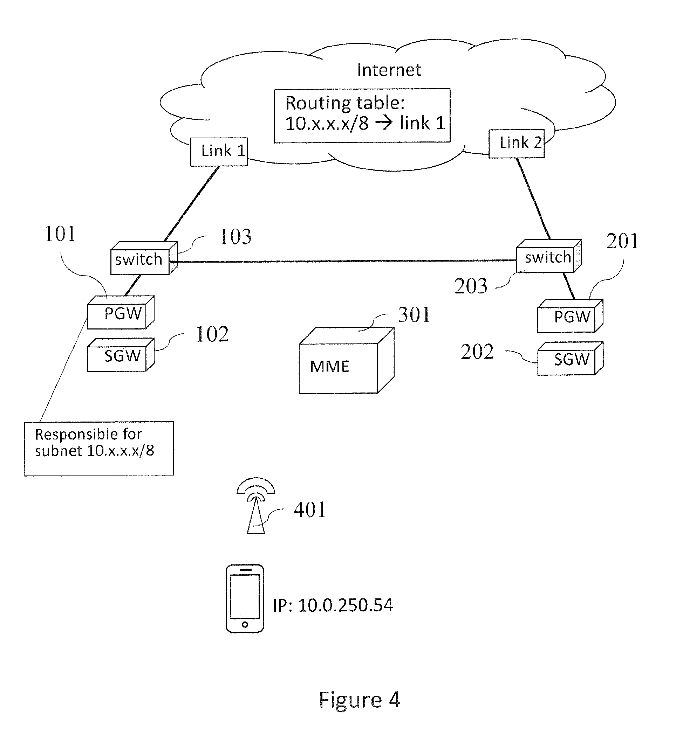

The third variant for the active bearer migration is based on the OpenFlow (OF) technology. This variant assumes more network elements to be present as depicted in Figure 4. The change compared to the initial network architecture of Figure 1 is the availability of two switches 103 and 203 that are located on the traffic flow between the Internet and the PGWs. This architecture is illustrated in Figure 4. Furthermore, it is assumed that these two switches also have a means to exchange data between them. Such a configuration will occur if the PSGWs are all run in a datacenter, preferably in a virtualized deployment. Then, such switches are available as top-of-rack, end-of-row, or aggregation layer switches.

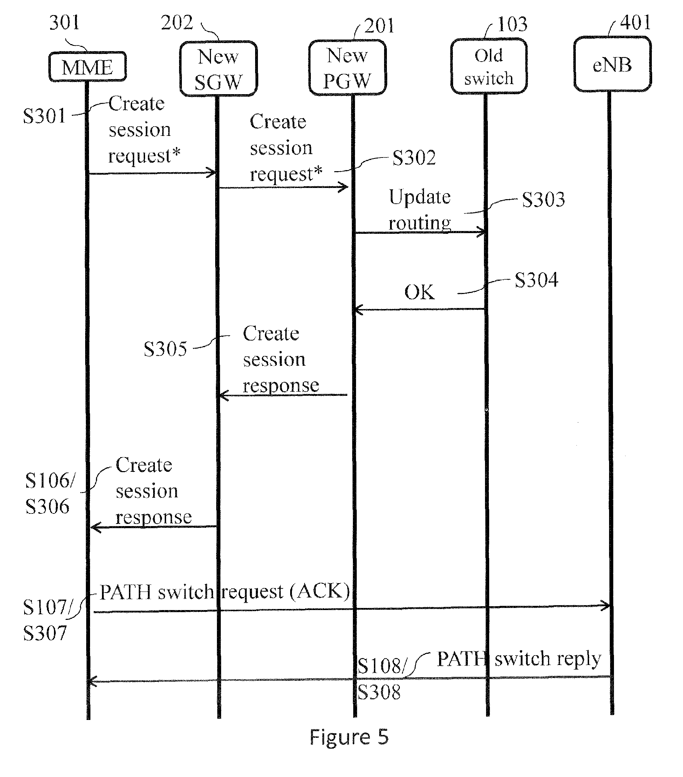

The signaling sequence for this migration strategy is shown in Figure 5.
- S301: The MME send a CSR* to the new SGW. In this request, it indicates that the method with a rerouting at the switch layer should be used for the migration. The identity of the switch 103 used in this procedure may be transmitted along in this step but it does not have to be transmitted: It is also possible to e.g. preconfigure the new PGW with this information, or let an SDN based switch controller decide how to best reroute the traffic.
- S302: the SGW forwards a CSR to the new PGW, indicating that it should perform a rerouting with the switch-based method and transmits along all the necessary information to create a copy of the already setup bearer, especially the UE's IP address. The new PGW in this step also decides which switch it has to update according to one of the following methods: a) it receives this information in step S302 and uses thus this information; b) it has been preconfigured with the necessary switch's address/ID; c) it forwards the switchover request to an SDN based controller, that then decides itself which switch to modify.
- S303: the new PGW triggers the rerouting of the traffic. This can either be done by letting the new PGW directly contact the switch, or by transmitting the 'update routing' command to an SDN controller, in case an SDN based switch is available. In the second case, the SDN controller, which may e.g. be an OpenFlow controller, will determine the right switch to change the routing for the traffic for the affected bearer by taking into account information transmitted by the new PGW in this step, most notably the source and destination IP address and used ports of the bearer.
- S304: the switch respectively SDN controller acknowledges the routing update.
- S305: the SGW replies the MME with a create session response. Note that optionally, the SGW can also inform the old PGW 101 now that the bearer can be deleted, which is not explicitly depicted in Figure 5
- S306-S308: similar to the procedure depicted in Figure 2.

The configuration for the second switch 203 above has not been described as it does not have to be reconfigured with a per-bearer granularity. Rather, it can be configured before the whole migration procedure is started, i.e. after step S201, such that it forwards all packets for the IP address range for which the old PGW was responsible towards the new PGW. Only the first switch 103 needs to be updated with per-bearer granularity.

This solution has the advantage that the switchover of the processing task from the old PGW 101 to the new PGW 201 is performed more quickly and the old PGW is directly offloaded from processing traffic. Furthermore, during the migration period, which may take some time since all bearers have to be migrated, it can happen that a message is received by the new SGW that leads to a modification of the bearer, e.g. the mobility management signaling described in the paragraphs on the treatment of signaling after the migration of a bearer but before migration completion. In the previous methods present in the paragraphs on active bearer migration with special signaling or with special SGW, the SGW has to update both old and new PGW during the migration period with this information, thus doubling the signaling load. In the case of the switch based method depicted in this section, this can be avoided. On the downside, the switch based method requires the presence of switches and also uses signaling that is different from what is normally specified in 3GPP.

The following concerns a description of an embodiment of the idle bearer migration according to step S203. The idle bearer migration in its simple form follows the same procedure as the active bearer migration that has been described above. This approach has the disadvantage that all bearers have to be re-established, even the idle ones, leading to a high signaling load and a long time until the external routing can be updated and the active bearers can be processed at the new site.

Therefore an optimization called "delayed idle bearer migration" is proposed in which the idle bearer migration takes place after the update of the external routing. This method comprises the following steps:
1. Informing the MME that bearers of old PSGW should be migrated to new PSGW (step S201)
2. Migrating ACTIVE bearers (step S202)
3. Updating external routing (step S203b, changed)
4. Migrating idle bearers (step S204b changed)

The basic idea is to migrate the idle bearers only after the external routing is updated, under the assumption that most bearers will stay idle during the migration period. This has the advantage that the overall duration of the migration can be accelerated.

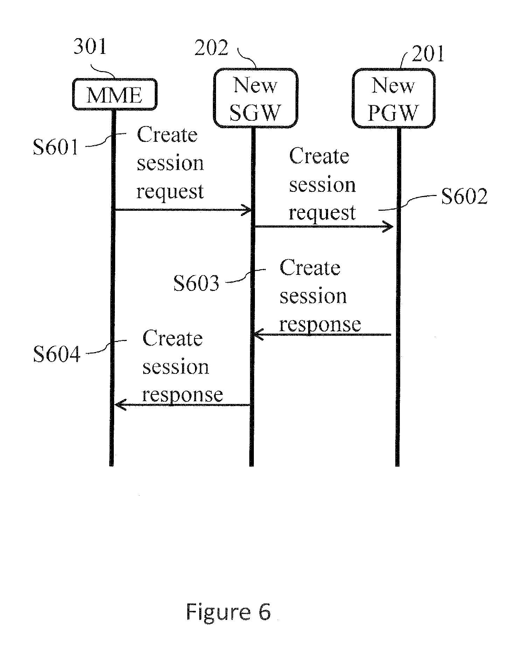

When the MME receives the information that the PSWG should be migrated according to step S201, it records this decision for all IDLE bearers associated with PSGW 101/102. Figure 6 shows the details of step S204b: the MME re-establishes the states of the IDLE bearers in the new PSGW by issuing appropriate 'create session request' messages from MME to SGW and from SGW to PGW. This messaging sequence is similar to the one of the normal 3GPP specified attach procedure, however note that the eNB is not involved here. This method works fine as long as the IDLE bearers stay idle during the migration period.

However, special treatment is necessary for those idle bearers that become active during the active bearer migration procedure, i.e. the bearer is idle when step S201 is executed, but becomes active before step S204b is executed. For example, this happens if the mobile UE itself has new data to transmit.

When the MME receives a Non Access Stratum (NAS) protocol service request message indicating such a situation for a certain idle bearer currently in the migration stage, it directly issues a create session request to the new SGW as indicated above. The new SGW will then either
- follow the same procedure as for an active bearer according to Figure 2 or 5 for the case the migration is still in step S202 of the procedure or
- reestablish the bearer with the new PSGW according to Figure 6 when step S203b has already been successfully performed.

As described above, this delayed idle bearer migration can dramatically speed up the migration especially for the active bearers, as only the signaling for the active bearers has to be performed and then the update of the external routing can be triggered. This approach, however has one downside. For the transition period after step S203b has been successfully executed, the new PSGW does not have the necessary state information to process downlink packets for the idle bearers. Thus, such packets have to be dropped. For packets arriving in the uplink (e.g. if the UE requests service), the MME is informed about a connection wish and can thus make the necessary setup in an on-demand fashion.

Thus, the 'delayed idle bearer migration' optimization comes at the price that during the transition period, some packets have to be dropped.

The following is related to the aspect of charging according to embodiments of the invention. Charging is one field where the PGWs interact with the charging infrastructure. This section describes how charging is handled by the present invention.
- For online charging, a special treatment of the migration case is not necessary:
   - The new PGW requests credit from the online charging system (OCS) if it receives a CSR from the new SGW (S102, no change compared to existing procedure)
   - If credit is granted, the bearer states are established
   - If no credit is available, the bearer will be dropped/not be established.
   - One possible drawback could be that a situation might occur where the old PGW has requested a certain amount of credit but does not use it up, and that the new PGW has to drop a bearer. However, this situation is considered to be a rare case that does not justify changes in the existing charging architecture.
   - After the migration, the old and new PGW have to send updates to the OCS to consolidate the usage information. However, a similar procedure might even be already specified today, as already today, a UE can request services from different APNs / PDNs.
- For offline charging, each PGW (both old and new one) will create their own charging records independent of each other. The offline charging system (OFCS) must only be able to sum up the different charging records.

It will be readily apparent to the skilled person that the methods, the elements, units and apparatuses described in connection with embodiments of the invention may be implemented in hardware, in software, or as a combination of both. In particular it will be appreciated that the embodiments of the invention and the elements of modules described in connection therewith may be implemented by a computer program or computer programs running on a computer or being executed by a microprocessor. Any apparatus implementing the invention may in particular take the form of a computing device acting as a network entity.

## Claims

1. A method for migrating in a mobile communications network a first mobility anchor handling a subnetwork of said mobile communications system and having a plurality of user equipment (UEs) connected thereto to a second mobility anchor, said method comprising:
establishing in said second mobility anchor copies of the bearer states at said first mobility anchor including the address under which said user equipment is reachable;
informing one or more network entities outside said first mobility anchor that said subnetwork which has been reachable through said first mobility anchor is now reachable via said second mobility anchor.

2. The method of claim 1, wherein the data to and from said UEs after said migration passes through said second mobility anchor instead of said first mobility anchor.

3. The method of claim 1 or 2, said first mobility anchor located in a first packet gateway (PGW) and said second mobility anchor located in a second packet gateway (PGW), additionally comprising an SGW, said method comprising:
sending a create session request (CSR) to said SGW;
said SGW sending a CSR to said second PGW;
issuing a rerouting request which informs one or more network entities outside said subnetwork that the packets directed to and from said user equipment are now to be routed through said second PGW.

4. The method of claim 3,
wherein the sending of a CSR to said SGW is done from a mobility management entity (MME), and/or
wherein the sending of a CSR to said second PGW is done from the SGW, and/or
wherein the sending of a CSR to said second PGW establishes a copy of said bearer in said second PGW with the existing address of the user equipment address of said bearer belonging to said subnetwork.

5. The method of claim 4 wherein said CSR to said SGW is configured such that it either implicitly or explicitly contains an indication of said second PGW to inform said SGW that also said second PGW should be prepared to handle said bearer.

6. The method of claim 5, wherein said CSR to said SGW contains a parameter indicating the request to change the PGW.

7. The method of claim 5,
wherein the SGW is configured to receive a configuration message indicating the request to change the PGW and disabling handover with SGW relocation during the migration time, and/or
wherein the CSR to said SGW is a normal CSR.

8. The method of claim one of claims 1 to 7, wherein
a border gateway protocol update message is used to inform said one or more network entities outside said first mobility anchor that said subnetwork which has been reachable through said first mobility anchor is now reachable via said second mobility anchor, or
said one or more entities are one or more switches which are located before said first and said second PGW, and said second PGW after having created a copy of a bearer informs said one or more switches to change the routing such that the traffic of said bearer is routed through said second PGW instead of through said first PGW, or
the one or more entities are MPLS switches connecting one or multiple entrance points with the first and second PGW and an update of the routing is done by setting up a new MPLS tunnel between a network entrance point and the new PGW, or
the one or more entities are IP routers connecting one or multiple entrance points with the first and second PGW and an update of the routing is done by using an interior gateway protocol to update the routing between a network entrance point and the new PGW.

9. The method of one of claims 3 to 8, comprising:
Sending a CSR to said SGW which indicates that the migration should be performed using a rerouting in a switch layer comprising one or more switches located before said first and said second PGW;
triggering the rerouting of the traffic by said second PGW after the corresponding bearer has been established therein.

10. The method of claim 9, wherein said rerouting comprises:
Said second PGW contacting the switch based on information which it has received with said CSR message; or
said second PGW contacting the switch which it has been preconfigured to use for the rerouting; or
said second PGW contacting a controller which determines the switch to be used for the rerouting, said method further comprises:
updating the switching table in the switch or switches triggered by said second PGW to reroute the traffic through said second PGW instead of said first PGW.

11. The method of one of the preceding claims, wherein
said method uses messages used in a handover with a SGW change, wherein said CSR message contains an indication that the second PGW should be prepared to handle the bearer, said indication preferably comprising the address of said second PGW, and
said SGW in response to said indication sends a CSR to said second PGW to establish a copy of the bearer in said second PGW.

12. The method of one of claims 3 to 11, comprising:
Routing uplink packets from said SGW to said second PGW after the corresponding bearer has been established in said second PGW while downlink packets are still routed through said first PGW, or
routing uplink packets from said SGW to said second PGW after the said rerouting request has been issued and downlink traffic has reached said SGW via said second PGW, and/or
wherein
idle bearers are migrated after the rerouting has been performed for the active bearers.

13. The method of claim 12, comprising:
for the idle bearers to be migrated, sending a CSR to said SGW and from said SGW to said second PGW;
after having established the copies in both said SGW and said second PGW, if a bearer becomes active again, transmitting traffic through said SGW and said second PGW.

14. The method of claim 15,
wherein copies of the idle bearers are established at the second PGW, and
wherein the sending a CSR to said SGW is preferably done from a mobility management entity (MME).

15. The method of one of claims 12 to 14, comprising:
If an idle bearer becomes active before the rerouting has been established, migrating said bearer according to the procedure for the migration of active bearers, and
if an idle bearer becomes active after the rerouting has been established, migrating said idle bearer by a CSR sent, preferably from an MME, to said SGW and a CSR sent, preferably from said SGW, to said second PGW.

16. The method of one of claims 1 to 15, wherein
said first mobility anchor comprising a first packet gateway (PGW) and said second mobility anchor comprising a second PGW, the first PGW being connected to a first SGW which is different from said SGW, and the second PGW being connected to said SGW, also referred to as second SGW, said method comprising:
sending a create session request (CSR) to said second SGW;
sending a CSR to said second PGW;
sending a modify bearer request (MBR) to said first PGW;
issuing a rerouting request which informs one or more network entities outside said subnetwork that the packets directed to and from said user equipment are now to be routed through said second PGW.

17. The method of claim 16,
wherein the sending of a CSR to the first SGW establishes in said second PGW a copy of a bearer existing in said first PGW, and/or
wherein the sending of a MBR to said first PGW is done from the second SGW and instructs said first PGW to redirect traffic via the second SGW.

18. The method of claim 16 or 17, wherein
messages used in a handover with a SGW change comprise a path switch request ACK message sent from the mobile management entity (MME) to the eNB to which said user equipment is connected, wherein
said eNB is configured such that it accepts this path switch request ACK message without having sent a path switch request before.

19. The method of one of claims 16 to 18, wherein
a SGW handover procedure is used to redirect traffic of the bearers from said first PGW to the second SGW, wherein, after redirection of one of said bearers,
the uplink traffic of the bearer flows through the second SGW to the first PGW,
the downlink traffic of the bearer flows through the first PGW to the second SGW, and
the second PGW is prepared with a copy of the state of the bearer processed by the first PGW, so that the second PGW could process packets for the bearer, wherein before rerouting the traffic through said second PGW in order to handle modifications of bearers during the migration said method comprises:
updating said second PGW in case of the state of a bearer still routed through said first PGW being modified, wherein the updating is preferably initiated by the second SGW, or
preventing modifications of a bearer before rerouting said bearer through said second PGW, or
redirecting all uplink user data and signalling data to the second PGW once the bearer has been established therein.

20. An apparatus acting as a second mobility anchor and being adapted to migrate in a mobile communications network a first mobility anchor handling a subnetwork of said mobile communications system and having a plurality of user equipment (UEs) connected thereto to a said second mobility anchor such that the data to and from said UEs after said migration passes through said second mobility anchor instead of said first mobility anchor, said apparatus comprising:
a module for establishing in said second mobility anchor as per-bearer states copies of the bearer states at said first mobility anchor;
a module for informing one or more network entities outside said first mobility anchor that said subnetwork which has been reachable through said first mobility anchor is now reachable via said second mobility anchor.

21. The apparatus of claim 20, further comprising:
A module for performing the steps according to one of claims 2 to 19.
